# FASCICULE DE BREVET EUROPEEN

(11) **EP 3 899 516 B1**
(45) Date de publication et mention de la délivrance du brevet: **10.04.2024**
(21) Numéro de dépôt: 19848802.5
(22) Date de dépôt: 20.12.2019
(51) Int. Cl.: G01N 27/27, G01N 27/404

(54) **MÉTHODE DE MESURE CONTINUE DE LA CONCENTRATION EN TRICHLORAMINE DANS L'AIR**
VERFAHREN ZUR KONTINUIERLICHEN MESSUNG DER TRICHLORAMINKONZENTRATION IN LUFT
METHOD FOR CONTINUOUSLY MEASURING THE TRICHLORAMINE CONCENTRATION IN AIR

(30) Priorité: 21.12.2018 FR 1873946
(43) Date de publication de la demande: 27.10.2021
(73) Titulaire: Cylergie, 92800 Puteaux (FR)
(72) Inventeur: ARCHENAULT, Martial, 69009 Lyon (FR); BUREAU, Maxence, 69600 Oullins (FR); ROUSSEL, Nathalie, 69290 Craponne (FR)
(74) Mandataire: Cabinet Beau de Loménie
(86) Numéro de dépôt international: PCT/FR2019/053231
(87) Numéro de publication internationale: WO 2020/128382

(56) Documents cités:
- EP-A1- 2 865 955
- FR-A1- 2 933 196
- US-A1- 2002 042 686
- US-A1- 2017 016 847

## Description

### Domaine Technique

L'invention s'inscrit en complément de la demande de brevet EP2865955 décrivant un système de régulation de traitement d'air et de ventilation d'un local de piscine. Il y est proposé un dispositif de contrôle d'une centrale de traitement d'air pour local constitué par une piscine couverte et nécessitant un assainissement régulier de l'air, la centrale comprenant au moins un ventilateur pour créer une circulation d'air extrait du local et prélever de l'air neuf à l'extérieur du local, et un système de mélange variable entre air neuf et air extrait pour le soufflage d'air dans le local, le dispositif de contrôle étant configuré pour faire varier les proportions de mélange en air neuf et air extrait en fonction d'un suivi de l'air du local, le dispositif de contrôle étant de plus configuré pour commander la vitesse du ventilateur en fonction d'un suivi de l'air du local.

Suivant cette invention, ce moyen de contrôle de traitement de l'air est asservi à ces paramètres :
- Température de l'air extrait ;
- Humidité relative de l'air extrait ;
- Risques de condensation sur les parois du bâtiment ;
- Déséquilibre sur les débits d'air soufflés et extraits du local ;
- Qualité de l'eau.

Il est précisé que dans un mode de réalisation particulier, le dispositif de contrôle est configuré pour commander le traitement d'air en tenant compte d'une mesure directe de chloramines dans l'air du local ou l'air repris ou d'une mesure associée à une concentration de chloramines dans l'air. Toutefois, ce mode de mesure, n'est pas précisé. L'objet de la présente invention est de préciser ce mode de mesure.

Il apparait pourtant décisif d'asservir un système de traitement d'air des piscines à une concentration de trichloramine dans l'air. En effet, la trichloramine (NCl₃ ou Trichlorure d'Ammonium), produit gazeux issu de la réaction du chlore dans l'eau avec les molécules ammoniaquées, est un produit classé irritant, toxique, par l'INRS et il est indispensable de piloter un système de traitement d'air de local de piscines en prenant en compte la mesure de trichloramine dans l'air.

### Technique antérieure

L'état de l'art montre qu'il n'existe pas aujourd'hui de méthode fiable et reconnue de mesure continue de trichloramine dans l'air. Privé de cette mesure, le système de traitement d'air de piscine présente donc le risque de recycler un air malsain et dangereux pour les occupants du local, ainsi que de rendre impossible toute régulation de la ventilation du hall de la piscine tenant compte de plages de seuils relatifs aux résultats cette mesure.

En effet, la mesure de trichloramine dans l'air fait l'objet de nombreux programmes de recherche dans le monde ayant des objectifs comparables à l'objet de la présente invention.

Les seules techniques d'analyses éprouvées sont des méthodes de mesure semi continue : on fait passer durant « un certain temps » un débit d'air représentatif de l'atmosphère à contrôler sur un piège chimique fixant NCl₃. Après absorption de cette espèce, on la fait réagir avec des produits chimiques aboutissant à une variation de couleur d'une solution dont l'intensité est proportionnelle à la quantité piégée. On remonte ainsi à la concentration de produit recherché dans l'air. La réponse indique la quantité de NCl₃ piégée durant le temps d'échantillonnage, sans permettre une discrimination sur un pas de temps court.

La méthode de référence a été décrite très précisément par l'INRS *(INRS-Hygiène et Sécurité au travail Cahier de notes documentaires-Premier trimestre 2004-194139.).* Même pratiquée par une équipe expérimentée, la limite de détection avoisine 0,1 mg/m³ (100 ppb) pour un prélèvement d'une heure.

Cette méthode est également décrite dans la demande FR2933196. Cette demande décrit un mode de prélèvement et d'analyse de trichlorure d'azote dans un volume d'air qui peut être un volume d'air de halle de piscine. Il s'agit d'un prélèvement non automatisé suivi d'une analyse ponctuelle chimique avec un procédé séquentiel, fractionné, manuel, non automatisé, utilisant des produits chimiques. Ce procédé permet seulement de déterminer la concentration de trichlorure d'azote dans l'air des piscines à des fins réglementaires ou sanitaires.

Cette méthode de référence a été adaptée par l'INRS et intégrée sous forme de mallette d'analyse, vendue par la société Syclope sous la dénomination Valise Triklorame^{®}. Des essais comparatifs ont démontré de bonnes concordances entre les analyses de laboratoire et les analyses rapides par cette technique (*Mesures de la concentration en trichloramine dans un établissement aquatique. Mise en œuvre du kit d'analyse Triklorame. Fabien GERARDIN* - *Isabelle SUBRA- INRS*). Le mode de prélèvement est le même que la méthode INRS utilisée par les laboratoires. L'air est aspiré pendant 1h (VLE, limite d'exposition) à 8 h (VME, exposition moyenne) à 2 l/min. Les molécules de NCl₃ sont piégées par des filtres imprégnés de carbonate de sodium et trioxyde de diarsenic. Syclope fournit une mallette de consommables et un luminomètre qui permettent de dessorber les filtres et de réaliser l'analyse directement sur site. Théoriquement, le kit permet d'assurer sur place le prélèvement de NCl₃ et son analyse chimique. La durée de prélèvement minimale est d'une heure. La révélation chimique et l'obtention des résultats nécessitent un(e) technicien(ne) habituée aux manipulations chimiques et nécessite quinze minutes. L'analyse sur site est donc possible mais demande un doigté et une expertise chimique qui n'est pas celle que l'on peut attendre d'un technicien d'exploitation de piscine.

Le Kit de mesure TriChlorAir^{®} de CIFEC est issu d'un partenariat entre Ethera, le CEA, et le CNRS. La méthode d'analyse utilisée est basée sur la détection très sélective des polluants de l'atmosphère piégés sur des matériaux nanoporeux, « éponges » adaptées au polluant-cible. La reconnaissance moléculaire se fait ensuite par colorimétrie, le média changeant de couleur au fur et à mesure de son association avec la trichloramine. Les mesures s'effectuent par l'intermédiaire d'un système de pompage qui fait passer à un débit constant (200 ml/min) l'air à analyser dans une cellule d'exposition contenant le capteur serti dans un badge. Les prélèvements n'excèdent pas 20 min. La teneur en trichloramine est obtenue en mesurant une variation de coloration. Toute exposition du capteur doit donc être immédiatement précédée d'une première lecture optique, puis suivie d'une deuxième. Un logiciel pilote le procédé, effectue les calculs, quantifie lui-même la mesure de façon intégrée et ergonomique. L'ensemble est séduisant, astucieux, ergonomique. Toutefois, en premier lieu, le procédé s'est montré relativement lourd à expliquer et à opérer sur site réel. Le dispositif expérimental nécessite un ordinateur, des batteries (il n'y a simplement pas de prise électrique dans un hall de piscine) et 3 modules techniques. En outre le procédé s'effectue en plusieurs étapes et semble trop fastidieux pour un technicien qui doit intervenir en hall public avec un matériel intrusif. De plus des essais sur deux sites réels ont également révélé des problèmes de robustesse (bugs informatiques, défauts de lectures des badges, lectures optiques non reproductibles). Le principe de la mesure est aussi très dépendant des variations d'humidité du hall. Enfin, il n'y avait pas de corrélation satisfaisante entre mesures de référence (dont les résultats s'interprétaient facilement selon le lieu de prélèvement) et mesures par le kit Cifec effectuées en simultané.

Plusieurs programmes de recherches portent sur des techniques de mesures spectrophotométriques. Toutefois, la trichloramine n'a pas de bande d'absorption notable dans le proche Infra Rouge ce qui contraint à proposer des analyses dans l'infra-rouge moyen ou lointain, dispositifs lourds et couteux.

Ainsi, les solutions existantes connues de mesure de la trichloramine ont le défaut d'être discontinues, présentant un échantillon représentatif sur un pas de temps trop important pour asservir en direct un système de traitement d'air. Elles utilisent de plus des produits chimiques, des supports physiques qui doivent être renouvelés et qui se dénaturent dans le temps. L'expression du résultat exige en outre une expertise chimique non disponible sur les sites d'exploitation. Enfin, la réaction colorimétrique ne permet pas d'atteindre une précision suffisante pour mesurer l'apparition de NCl₃ dans l'ambiance des piscines couvertes.

Il existe donc un besoin de trouver une méthode de mesure continue fiable, non séquentielle, automatique, sans intervention humaine, sans produit chimique ni consommable, de la concentration en trichloramine dans l'air.

Les inventeurs se sont aperçus qu'il était possible d'obtenir une telle mesure à l'aide de deux techniques utilisées simultanément :
1. La mesure de concentration d'espèces oxydantes dans l'air ambiant d'un hall de piscine par capteur électrochimique ampérométrique à membrane et électrolyte utilisé classiquement pour la mesure de molécules gazeuses oxydantes dans l'air, et
2. La mesure de la diminution de chlore libre dans l'eau (demande chimique en chlore), moyennée sur 4 heures, qui permet d'étalonner et de certifier la mesure de NCl₃ dans l'air puisqu'une diminution de chlore équivaut à une transformation de chlore donc à la formation de chloramine.

Cette méthode permet de déterminer la concentration de trichlorure d'azote dans l'air des piscines à des fins réglementaires ou sanitaires et surtout de contrôler en temps réel le renouvellement d'air dans le hall de piscine ou le traitement d'eau. Le terme « temps réel » est approprié car la vitesse de mesure est inférieure au temps d'apparition de la trichloramine dans l'enceinte considérée.

La demande de brevet US 2017/016847 décrit de façon très complète et exhaustive un micro-capteur chimique mesurant des gaz oxydants dans l'air. Les gaz oxydants cités sont : NOx, Ozone, NH₃, H₂, SO₂, NO, CO, CO₂. Toutefois, elle ne mentionne aucunement la mesure d'une molécule chlorée telle que la trichloramine, ni l'utilisation de la mesure comme paramètre d'asservissement d'une centrale de traitement d'air, ni son application dans un volume d'air représentatif d'une halle de bassin.

En effet les inventeurs se sont aperçus de façon surprenante que la mesure continue de la trichloramine est une mesure nécessaire et suffisante pour qualifier la qualité de l'air dans une halle de bassin et donc pour réguler la centrale de traitement d'air correspondante. Ils se sont également aperçus que la trichloramine a un pouvoir oxydant discriminant compatible avec la technologie ampérométrique et que le micro-capteur pouvait être étalonné dans l'optique de cette mesure. Ainsi une telle mesure, en particulier pour un usage spécifique (régulation du traitement d'air) et sur un milieu spécifique (volume d'air d'une piscine collective) n'est pas décrite ni suggéré dans l'art antérieure.

### Exposé de l'invention

La présente invention concerne donc un procédé de mesure continue de la concentration en trichloramine dans l'air d'un local fermé contenant un bassin d'eau traitée au chlore comprenant les étapes suivantes :
a - mesure de la concentration C1 en gaz oxydants dans l'air ambiant à l'intérieur du local à l'aide d'au moins un premier capteur électrochimique ampérométrique à électrolyte protégé par une membrane perméable aux gaz et dont le potentiel de travail fixe est supérieur à 1,1V ;
b - mesure de la diminution de la concentration C2 en chlore libre dans le bassin d'eau, moyennée sur une période d'au moins 4 heures, avantageusement de 12 heure, convertie dans l'unité de mesure de C1 ;
c - obtention la concentration finale Cf en trichloramine dans l'air ambiant à l'intérieur du local par comparaison entre les concentrations C1 et C2 et choix de la plus petite de ces concentrations.

Au sens de la présente invention, on entend par « local fermé », un local dont l'air intérieur est largement, si ce n'est totalement, séparé de l'air extérieur par des parois et / ou murs et / ou vitres et / ou portes et le toit du local. Il peut ainsi s'agir par exemple du hall d'une piscine couverte. Le local comprend en général un moyen de renouvellement de l'air, une gaine d'extraction de l'air et/ou une centrale de traitement de l'air. Ce local est en particulier tel que décrit dans la demande EP2865955. Avantageusement l'humidité du local varie entre 40 et 75 % d'humidité relative.

Le local selon l'invention comprend un bassin d'eau traitée au chlore.

Au sens de la présente invention, on entend par « bassin d'eau traitée au chlore», un bassin d'eau qui nécessite l'utilisation de chlore ou de ses dérivés chlorés pour son entretien et en particulier sa désinfection. Il peut s'agir d'une piscine, en particulier d'une piscine collective, d'une pataugeoire et en particulier d'un bassin ludique ou d'un bassin olympique. En général l'eau est traitée avec du chlore, qui peut se trouver par exemple sous forme de ses dérivés chlorés tels que l'acide hypochloreux HOCI ou l'hypochlorite (OCl⁻) tel que l'hypochlorite de sodium (NaClO), qui réagit avec les produits azotés résultant de la décomposition des produits biologiques de pollution dissous dans l'eau pour produire des monochloramines, des dichloramines puis des trichloramines.

Le procédé selon la présente invention comprend donc une étape a) de mesure de la concentration C1, avantageusement en ppb ou en mg/m³, en gaz oxydants dans l'air ambiant à l'intérieur du local à l'aide d'au moins un premier capteur électrochimique ampérométrique à électrolyte protégé par une membrane perméable aux gaz et dont le potentiel de travail fixe est supérieur à 1,1V. Cette étape permet donc de mesurer la concentration C1 en gaz oxydants présents dans l'air du local fermé, tels que la trichloramine, l'ozone, le NO₂ et le chlore, que ces gaz soient dus à la pollution spécifique du bassin ou non. Un local de piscine n'est en effet pas susceptible de contenir d'autres gaz oxydants : les gaz non oxydants, polluants ou toxiques tels que les trihalo-méthanes, se trouvant à l'état de trace. La mesure par sonde électrochimique permet une mesure à l'instant t de la pollution spécifique aux piscines collectives.

Les capteurs électrochimique ampérométrique de détection de gaz oxydants dans l'air sont bien connus de l'homme du métier. Ils sont ainsi commercialisés par plusieurs sociétés européennes, asiatiques ou américaines pour la surveillance de l'air urbain, tel que par exemple par la société Cairpol (capteur de type CairSens). Ainsi, avantageusement le capteur, dont avantageusement la longueur est inférieure à 8 centimètres, est un système intégré constitué d'une cellule de mesure miniaturisée, d'un système de prélèvement d'air dynamique, par exemple par petit ventilateur intégré, d'un filtre, tel qu'un filtre à air en papier, et d'un circuit électronique permettant de mesurer et de traduire les faibles variations en données de concentration avec une limite de détection de 50 ppb de NCl₃. Le capteur commercialisé par la société Cairpol, par exemple, délivre une mesure très bien corrélée aux mesures de référence de NCl₃ dans l'air des piscines.

Un exemple de réalisation est le montage d'une cellule électrochimique composée d'une électrode centrale (cathode) et d'une contre-électrode (anode) maintenue à un potentiel de travail par une électrode de référence, les trois électrodes étant immergées dans une solution d'électrolyte qui est séparée de l'échantillon gazeux par une membrane perméable au gaz. L'espèce gazeuse oxydante qui pénètre à travers la membrane dans la cellule réagit avec l'électrolyte qui subit alors une réaction de réduction à la cathode, entraînant la circulation d'un courant électrique mesurable. Ce courant est proportionnel à la quantité de gaz pénétrant dans la cellule, et donc proportionnel à la pression partielle du gaz dans l'échantillon à l'extérieur de la cellule. Un circuit électronique, alternativement une unité numérique, stabilise la tension de travail, compense les interférences de la température ou les diminutions de sensibilité de la cellule électrochimique et traduit le courant électrique en mesure étalonnée.

Dans le cadre de la présente invention, le potentiel de travail de la cellule a été réglé pour assurer la réduction des espèces gazeuses oxydantes, susceptibles de polluer un hall de bassin de piscine : trichloramine, chlore gazeux et ozone. Le potentiel de la trichloramine avoisinant 1,42 V, le potentiel de travail de la cellule est ainsi réglée au-dessus de 1,1 V.

Avantageusement, le capteur électrochimique ampérométrique utilisé dans le procédé selon l'invention ne réagit pas aux variations d'humidité comprises entre 40 et 75 % d'humidité relative, domaine de variation observé dans les halls de piscine. En revanche ce type de capteur réagit aux variations de température de l'air (mesure ampérométrique doublée quand la température de l'air augmente de 15°C), ce qui n'est pas problématique car la température au sein d'un local fermé contenant un bassin d'eau traitée pendant son utilisation (c'est-à-dire au moment où la teneur en trichloramine dans l'air peut augmenter) varie rarement d'autant. Avantageusement, ce capteur est moins sensible aux variations de vitesse d'air (entre 0,2 et 3 m/s) et / ou aux variations de pression, dans une limite de 30 hPa.

De façon avantageuse, le capteur électrochimique ampérométrique de l'étape a) du procédé selon l'invention est installé dans ledit local et / ou dans la gaine d'extraction de l'air dudit local et / ou dans la centrale de traitement de l'air dudit local. Dans un mode de réalisation particulièrement avantageux, le capteur électrochimique ampérométrique est installé dans la gaine d'extraction de l'air dudit local, en particulier dans la gaine de reprise de la Centrale de Traitement d'Air. En effet dans ce cas, la mesure est plus fiable et plus stable que dans l'air ambiant, non contrôlé par un flux, c'est-à-dire dans le cas où le capteur électrochimique ampérométrique est installé dans ledit local. L'insertion du capteur dans la gaine de reprise de la Centrale de Traitement d'Air permet ainsi de stabiliser le capteur dans une zone de température, d'humidité (imposée par les consignes de réglage de l'air du local contenant le bassin), de pression et de vitesse permettant une mesure stable et fiable. La mesure la plus représentative est obtenue par un capteur inséré dans la gaine de reprise de l'air du local. En effet, les mesures issues de capteurs installés dans le local ne sont pas dans certains cas exemptes d'hétérogénéités de concentration des gaz oxydants polluants dans ce local, polluants dont on constate habituellement la présence du fait de conceptions imparfaites des installations aérauliques ; ces polluants incontrôlables et donnant lieu à cette hétérogénéité dans les mesures dans le local ne permettent donc pas de corriger le réglage de débit d'air ni d'effectuer aucune mesure en un point particulier dans l'environnement du bassin. La mesure la plus intéressante pour agir sur la qualité moyenne de l'air est donc bien la mesure issue d'un capteur situé en gaine de reprise. La centrale de traitement de l'air est en particulier telle que décrite dans la demande de brevet EP2865955. Ainsi, une centrale de traitement d'air, qui est un dispositif connu, assure dans la situation selon l'invention une extraction d'air active hors du local fermé, en particulier du hall, et un apport d'air dit air soufflé, constitué d'un mélange d'air extrait et d'air neuf, ce dernier étant prélevé à l'extérieur du local, en particulier à l'extérieur du bâtiment contenant le local, ce mélange étant généralement filtré et éventuellement chauffé. L'air extrait réutilisé est appelé air repris ou air recyclé. Les débits d'air extrait et soufflé, qui sont déterminés par des ventilateurs d'extraction et de soufflage, sont en général constants, si ce n'est qu'ils peuvent être asservis marginalement pour compenser la perte de charge des filtres présents dans les conduits. En dehors de cela, ces débits sont également diminués hors des horaires d'utilisation du local.

La mesure obtenue à l'étape a) peut être étalonnée par une analyse ponctuelle de trichloramine dans l'air, dite méthode de référence telle que décrite dans le paragraphe « Technique antérieure ». Dans ce cas, il faut comparer une plage de temps durant laquelle est prélevé un échantillon de mesures de référence à une moyenne de mesure électrochimique durant cette même plage de temps.

Le procédé selon la présente invention comprend en outre une étape b) de mesure de la diminution de la concentration C2 en chlore libre dans le bassin d'eau, moyennée sur une période d'au moins 4 heures, avantageusement sur une période d'au moins 12 heures, convertie dans l'unité de mesure de C1, avantageusement en mg/m³ ou ppb. Cette mesure est classiquement fournie par des analyseurs de chlore dans l'eau, les plus performants utilisant la méthode de référence colorimétrique. Ils délivrent des mesures exprimées en mg/litre d'eau qui sont ensuite converties par des méthodes bien connues de l'homme du métier en mg/m³ ou ppb. Elle permet donc une mesure à l'instant t-Δt, Δt étant d'au moins 4 heures, avantageusement d'au moins 12 heures. Une diminution de chlore équivaut à une transformation de chlore donc, pour partie, à la synthèse de chloramines qui se traduit à terme par la libération de NCl₃ dans l'air du bassin. Mais le processus de réactions chimiques présentant des cinétiques très variables, la concentration calculée de NCl₃ dans l'air doit être moyennée sur plusieurs heures afin d'être comparée aux mesures continues par le capteur électrochimique ampérométrique obtenu à l'étape a).

En effet, l'acide hypochloreux (HClO) qui est obtenu par réaction du chlore avec l'eau ou qui est utilisé directement comme désinfectant dans les piscines réagit avec les produits azotés résultant de la décomposition des produits biologiques de pollution dissous dans l'eau pour produire des monochloramines (NH₂Cl), des dichloramines (NHCl₂) puis des trichloramines. Trois moles de HClO sont nécessaires à la production d'une mole de NCl₃. Les trichloramines ont une tension de vapeur très basse, de sorte qu'ils sont très volatiles et pratiquement impossibles à mesurer dans l'eau. Ils s'évaporent rapidement dans l'air du local. La présence de dichloramines et d'acide hypochloreux dans l'eau entraine donc la formation de trichloramine dans l'air. L'évaporation de ces trichloramines dans l'air tire les réactions chimiques vers une consommation de dichloramines. La mesure de monochloramine et de dichloramine dans l'eau (dite mesure de chlore combiné) ne permet pas cependant de mesurer précisément le passage de trichloramine dans l'air. La chaîne de réaction amenant à la formation de trichloramine est la suivante :

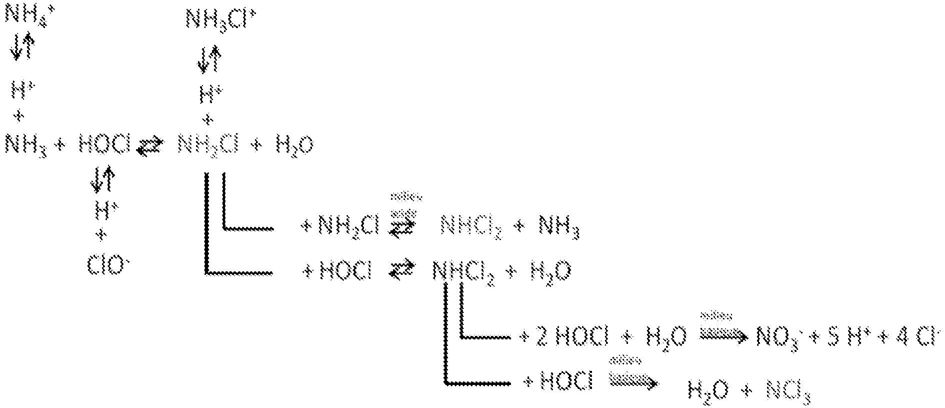

Toutefois cette étape b) n'est pas suffisante pour connaître la teneur en trichloramine de l'air car la consommation de chlore libre peut être attribuée à d'autres formes de transformation : évaporation, réduction par le fer ou autres métaux etc.

Ainsi le procédé selon la présente invention comprend une étape c) d'obtention de la concentration finale Cf en trichloramine dans l'air ambiant à l'intérieur du local par comparaison entre les concentrations C1 et C2 et choix de la plus petite de ces concentrations. Toutes les mesures sont exprimées en mg/m³ d'air ou ppb. Ainsi, si C1 < C2, alors Cf = C1 et si C2 < C1, alors Cf = C2. Enfin si C1= C2, Cf = C1 = C2. En effet Les erreurs de mesures, les dérives ou les interférences ont tendance à augmenter la réponse du capteur et à donner une mesure trop forte. Donc la correction la plus habituelle consiste à prendre la plus petite des mesures.

Cette étape c) est rendue nécessaire en permettant l'étalonnage du capteur de l'étape a) car la cellule électrochimique à électrolyte consommable dudit capteur présente le défaut de dériver. La concentration Cf obtenue est donc une mesure fiable et correspond bien à la concentration en trichloramine de l'air du local fermé.

Le procédé selon la présente invention peut en outre comprendre entre les étapes a) et b) les étapes intermédiaires suivantes :
a1 - mesure de la concentration C3, avantageusement en mg/m³ ou ppb, en gaz oxydants dans l'air ambiant à l'extérieur du local à l'aide d'au moins un second capteur électrochimique ampérométrique à électrolyte protégé par une membrane perméable aux gaz et dont le potentiel de travail fixe est supérieur à 1,1V ;
a2 - obtention de la concentration C4 en trichloramine dans l'air ambiant à l'intérieur du local par soustraction de la concentration C3 obtenue à l'étape a1) de la concentration C1 obtenue à l'étape a) ;
l'étape c) du procédé selon l'invention étant telle que ce sont les concentrations C4 et C2 qui sont comparés.

Le procédé selon l'invention peut donc comprendre l'étape a1) de mesure de la concentration C3 (avantageusement en ppm ou en mg/m³) en gaz oxydants dans l'air ambiant à l'extérieur du local à l'aide d'au moins un second capteur électrochimique ampérométrique à électrolyte protégé par une membrane perméable aux gaz et dont le potentiel de travail fixe est supérieur à 1,1V. Cette étape permet donc de mesurer la concentration C3 en gaz oxydants présents dans l'air ambiant à l'extérieur du local fermé, tels que l'ozone et le NO₂, ces gaz n'étant pas dus à la pollution spécifique du bassin. Cette étape permet également une mesure à l'instant t.

Le type de capteur utilisé dans cette étape est identique à celui de l'étape a). Avantageusement le capteur électrochimique ampérométrique de l'étape a) du procédé selon l'invention est installé à l'extérieur du local, avantageusement à l'extérieur du bâtiment contenant le local. Il peut être également installé dans le conduit d'arrivée d'air venant de l'extérieur du local (air neuf), en particulier de l'extérieur du bâtiment contenant le local, c'est-à-dire dans la gaine d'extraction de l'air venant de l'extérieur du local, en particulier de l'extérieur du bâtiment contenant le local. Il est en particulier installé dans la gaine d'air neuf de la Centrale de Traitement d'Air.

Le procédé selon la présente invention peut comprendre en outre une étape a2) d'obtention de la concentration C4 en trichloramine dans l'air ambiant à l'intérieur du local par soustraction de la concentration C3 obtenue à l'étape a1) de la concentration C1 obtenue à l'étape a). Ainsi donc, C4 = C1 - C3. C4 est donc également mesurée à l'instant t.

En effet, le capteur utilisé dans l'étape a) du procédé selon la présente invention n'est pas uniquement spécifique de la trichloramine. Il permet également de détecter les autres gaz oxydants que sont l'ozone, le chlore et le NO₂. Le fait de mesurer la concentration en gaz oxydants de l'air venant de l'extérieur (concentration C3), donc qui n'est pas due à une pollution du bassin, et de la soustraire à la concentration en gaz oxydants de l'air venant de l'intérieur (concentration C1) permet de déterminer la concentration en gaz oxydants provenant spécifiquement du bassin (concentration C4). On élimine en effet ainsi la concentration de gaz oxydants interférents provenant de l'air extérieur (ozone et NO₂) qui peuvent être présent en particulier en milieu urbain et / ou en été. En général, les gaz oxydants provenant spécifiquement du bassin sont essentiellement de la trichloramine.

Le procédé selon l'invention peut être combiné dans un automate de contrôle et de régulation selon des techniques biens connus de l'homme du métier.

La présente invention concerne en outre un procédé de traitement de l'air d'un local fermé contenant un bassin d'eau traitée au chlore comprenant les étapes suivantes :
A - Mesure continue de la concentration en trichloramine dans l'air dudit local à l'aide du procédé selon la présente invention ;
B - Diminution de la teneur en trichloramine dans l'air dès que la mesure de l'étape A est supérieure à la valeur de consigne.

Avantageusement, l'étape B est mise en oeuvre par dilution de l'air du local avec un apport d'air extérieur au local et / ou baisse de consigne de chlore dans l'eau du bassin et / ou élimination des chloramines de l'eau du bassin, par exemple par strippage.

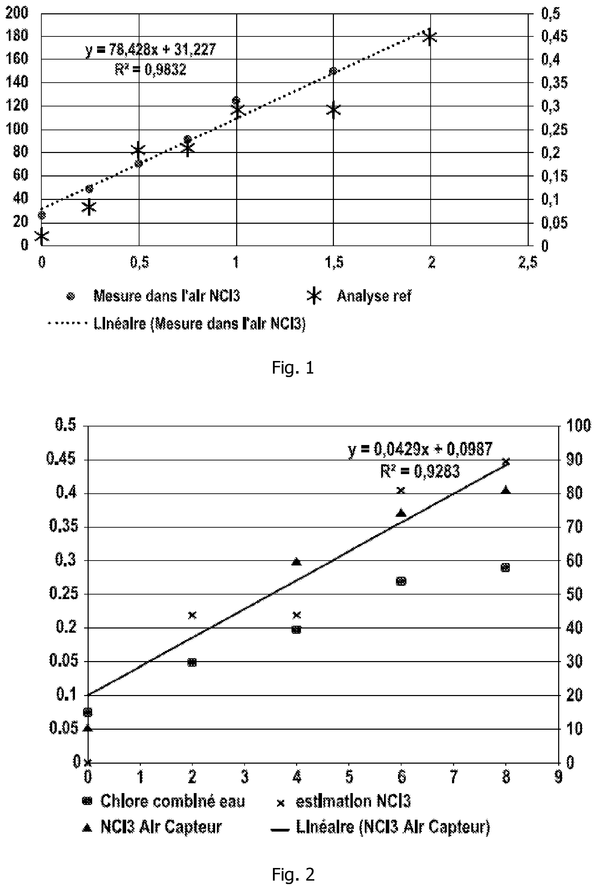

La dilution de l'air du local avec un apport d'air extérieur au local peut être mise en oeuvre en utilisant le procédé et le dispositif décrit dans la demande de brevet EP2865955. En effet la mesure de la teneur en trichloramine peut permettre la régulation de la Centrale de Traitement d'air ventilant le local contenant le bassin. Elle peut être ainsi utilisée pour réguler la teneur en air neuf nécessaire à la dilution de l'air. Un schéma d'asservissement d'une centrale de traitement d'air pour un local selon l'invention est par exemple illustré à la figure 2 d'EP2865955 dans lequel le capteur électrochimique ampérométrique de l'étape a) du procédé selon l'invention est représenté en 115 et l'analyseur de chlore dans l'eau de l'étape b) du procédé selon l'invention est représenté en 113 sur cette figure.

La présente invention concerne en outre l'utilisation d'au moins un capteur ampérométrique électrochimique à électrolyte protégé par une membrane perméable aux gaz et dont le potentiel de travail fixe est supérieur à 1,1V, avantageusement d'au moins deux capteurs, plus avantageusement en combinaison avec un analyseur standard de chlore dans l'eau, pour mesurer en continu la teneur en trichloramine dans l'air d'un local fermé contenant un bassin d'eau traitée au chlore, avantageusement pour déterminer la qualité de l'air dudit local fermé.

Elle concerne par ailleurs l'utilisation de ce capteur, avantageusement d'au moins deux capteurs, plus avantageusement en combinaison avec un analyseur standard de chlore dans l'eau, couplé à une centrale de traitement de l'air d'un local fermé contenant un bassin d'eau traitée au chlore, en particulier équipée d'un dispositif de contrôle et de régulation de la ventilation d'air dudit local, pour réguler le traitement de l'air dudit local fermé. Cette mesure en continue de la trichloramine peut donc être utilisée comme paramètre d'asservissement, en particulier continu, d'une centrale de traitement d'air d'un local fermé contenant un bassin d'eau traitée au chlore tel que par exemple dans le cadre du dispositif et procédé décrit dans la demande EP2865955. Ainsi, en particulier la centrale de traitement de l'air dudit local équipée d'un dispositif de contrôle et de régulation de la ventilation d'air dudit local et le traitement de l'air dudit local à l'aide de cette centrale sont avantageusement décrits dans la demande EP2865955.

La présente invention concerne enfin une installation comprenant :
- un bassin d'eau traitée au chlore dans un local fermé,
- au moins un premier capteur électrochimique ampérométrique à électrolyte protégé par une membrane perméable aux gaz et dont le potentiel de travail fixe est supérieur à 1,1V destiné à mesurer la concentration C1 en gaz oxydants dans l'air ambiant à l'intérieur du local,
- optionnellement au moins un second capteur électrochimique ampérométrique à électrolyte protégé par une membrane perméable aux gaz et dont le potentiel de travail fixe est supérieur à 1,1V destiné à mesurer la concentration C3 en gaz oxydants dans l'air ambiant à l'extérieur du local,
- un analyseur standard destiné à mesurer diminution de la concentration C2 en chlore libre dans le bassin d'eau,
- et avantageusement un dispositif électronique destiné à obtenir la concentration finale Cf en trichloramine dans l'air ambiant à l'intérieur du local en effectuant les étapes suivantes d'un calcul continu en temps réel:
   a) calcul de la moyenne glissante de la concentration C2 sur une période d'au moins 4 heures, avantageusement de 12 heures,
   b) conversion de cette moyenne dans l'unité de mesure de C1, avantageusement en mg/m³ ou ppb,
   c) comparaison entre les concentrations C1 et C2 et sélection de la plus petite de ces concentrations,
ledit dispositif électronique plus avantageusement émettant une alarme lorsque la concentration ainsi obtenue dépasse un seuil préétabli.

L'installation selon l'invention peut comprendre en outre une gaine d'extraction de l'air dudit local, une centrale de traitement de l'air dudit local avantageusement équipée d'un dispositif de contrôle et de régulation de la ventilation d'air dudit local, un conduit d'arrivée d'air venant de l'extérieur du local, une gaine d'extraction de l'air venant de l'extérieur du local et au moins un ventilateur pour créer un circulation d'air. Cette installation peut comprendre deux ventilateurs : un ventilateur de soufflage et un ventilateur d'extraction. La disposition des éléments de l'installation en dehors des capteurs électrochimiques ampérométriques, et en particulier la centrale de traitement de l'air dudit local équipée d'un dispositif de contrôle et de régulation de la ventilation d'air dudit local est avantageusement décrite dans la demande EP2865955. Avantageusement, le au moins un premier capteur électrochimique ampérométrique à électrolyte protégé par une membrane perméable aux gaz et dont le potentiel de travail fixe est supérieur à 1,1V destiné à mesurer la concentration C1 en gaz oxydants dans l'air ambiant à l'intérieur du local est installé dans ledit local ou dans la gaine d'extraction de l'air dudit local ou dans la centrale de traitement de l'air dudit local, en particulier il est installé dans la gaine d'extraction de l'air dudit local, plus particulièrement en particulier dans la gaine de reprise de la Centrale de Traitement d'Air.

Avantageusement, l'éventuel second capteur électrochimique ampérométrique à électrolyte protégé par une membrane perméable aux gaz et dont le potentiel de travail fixe est supérieur à 1,1V, destiné à mesurer la concentration C3 en gaz oxydants dans l'air ambiant à l'extérieur du local, est installé à l'extérieur du local ou dans le conduit d'arrivée d'air venant de l'extérieur du local, en particulier dans le conduit d'arrivée d'air venant de l'extérieur du local, plus particulièrement dans la gaine d'air neuf de la Centrale de Traitement d'Air.

La présente invention sera mieux comprise à la lecture de la description des exemples et des figures qui suivent qui sont donnés à titre indicatif non limitatif.

### Brève description des dessins

La figure 1 représente la mesure compensée de concentration de NCl₃ en fonction du polluant injecté (NHCl en g) dans l'air d'un local contenant un bassin chloré, à l'aide de deux capteurs électrochimiques ampérométriques en ppb et à l'aide de la méthode de référence en mg/m³ dans le cadre de l'exemple comparatif 1.
La figure 2 représente la corrélation entre quantité de polluant injecté en g et les mesures de la concentration en chlore combiné dans l'eau (en mg/l), de NCl₃ dans l'air d'un local contenant un bassin chloré mesurée à l'aide du capteur électrochimique ampérométrique en ppb et de la mesure de la diminution de la teneur en chlore du bassin moyennée sur 4 heure (en mg/l) dans le cadre de l'exemple 1.

### Exemples

### Exemple comparatif 1

Cet exemple a permis de valider les étapes a), a1) et a2) du procédé selon l'invention. Il est mis en oeuvre dans un pilote piscine permettant de reproduire toutes les caractéristiques configurables d'un bassin de piscine collective de 3m³ (température, pH, teneur en chlore, en polluants, etc.), et celles d'un hall de piscine (température, humidité de l'air, débit d'air neuf, etc.), hermétique d'un volume de 100 m³. A ce pilote, est associée une Centrale de Traitement d'Air automatisée, typique de celles qui sont exploitées dans les piscines collectives dont le débit de renouvellement d'air est stabilisé par exemple à 600 m³/h. Les mesures de Trichloramine sont effectuées avec deux capteurs électrochimiques ampérométriques selon l'invention, fournis par la société Cairpol (capteur de type CairSens). Le premier capteur est placé en gaine de reprise de la Centrale de Traitement d'Air, le deuxième capteur de compensation est placé en gaine d'air neuf afin de mesurer la concentration en gaz oxydants dans l'air extérieur alimentant l'air neuf du traitement d'air dans le hall de piscine. Pour cet exemple le taux de renouvellement d'air dans le hall du bassin est stable et égal à 5,9 Vol/h, avec un apport d'air neuf égal à 588 m³/h. Les mesures ont eu lieu en été où les pollutions de NO₂ et O₃ sont plus importantes dans l'air extérieur. L'expérience est effectuée sur 3 jours.

Du chlorure d'ammonium en des quantités croissantes (0,5g, 1g, 1,5g et 2g) est injectée toutes les 4 heures en moyenne dans le bassin afin de mesurer la concentration en trichloramine dans l'air à l'aide des capteurs électrochimiques ampérométriques selon l'invention. Une analyse de référence selon la méthode de l'INRS, ponctuelle, manuelle de NCl₃ dans l'air (en mg/m³) est effectuée sur une durée d'échantillonnage de 2 heures après injection du chlorure d'ammonium. Il a suffi de retrancher le signal du premier capteur par le signal du second capteur en gaine d'air neuf pour éliminer l'interférence des gaz oxydants de l'air extérieur.

L'injection dans le bassin d'une quantité variable de chlorure d'Ammonium provoque une brusque consommation de chlore libre dans l'eau, formation de mono et dichloramine (dans l'eau) puis trichloramine dans l'air (NCl₃). Les variations de chlore libre sont compensées par une régulation de chlore.

Les résultats de la variation de NCl₃ mesurée dans l'air par analyse normalisée en fonction de la quantité de polluant injecté et la corrélation entre mesure par capteurs et mesure de référence de NCl₃ sont représentées sur la figure 1 avec :
- Ordonnée droite : concentration de NCl₃ en mg/m³, par analyse de référence ;
- Ordonnée gauche : concentration de NCl₃ (unité, correspondant à la valeur de sortie du capteur en mV et comparable à une concentration en mg/m³), par mesure du capteur;
- Abscisse : quantité de polluant NH₄Cl injecté dans le bassin en g.

Le capteur de gaz oxydants électrochimique ampérométrique selon l'invention s'avère précis, fiable et présente une mesure reproductible, automatique, sans intervention humaine, sans produit chimique, sans risque de dégradation, connectable à un système de régulation de traitement de l'air des halls de piscines. Placé en gaine aéraulique, il ne présente pas de sensibilité croisée aux variations d'humidité relative d'un air de hall de piscine (40-75%), ni aux variations de température de l'air, ni aux variations de vitesse d'air ou de variations de pression, dans une limite de 30 hPa. Sa limite de détection est de 100 ppb (parties par milliard) de NCl₃.

### Exemple 1

Cet exemple a permis de valider les étapes a), b) et c) du procédé selon l'invention. Il est mis en oeuvre dans le même pilote que l'exemple comparatif 1 mais ne contenant qu'un seul capteur placé en gaine de reprise de la Centrale de Traitement d'Air et dans les mêmes conditions que l'exemple comparatif 1. Les mesures ont eu lieu en hivers où les pollutions de NO₂ et O₃ sont peu importantes dans l'air extérieur.

Du chlorure d'ammonium en des quantités croissantes (2g, 4g, 6g et 8g) est injecté toutes les 4 heures en moyenne dans le bassin afin de mesurer :
- la concentration en trichloramine dans l'air à l'aide des capteurs électrochimiques ampérométriques selon l'invention (NCl₃ air capteur),
- les concentrations d'espèces chlorées dans l'eau (chlore combiné eau), et
- la diminution de la concentration en chlore libre dans l'eau moyennée sur une période de 4 heures, mesuré par pompe doseuse convertie en mg/m³ (estimation de NCl₃ : l'intégrale de la courbe du signal du régulateur d'injection de chlore sert d'estimation de la demande chimique en chlore, c'est-à-dire de la diminution de la concentration en chlore libre).

Les résultats sont présentés dans la figure 2 avec :
- Ordonnée droite : concentration de NCl₃ dans l'air mesuré par le capteur (NCl₃ air capteur) et diminution de la concentration en chlore libre (estimation de NCl₃) ;
- Ordonnée gauche : chlore combiné;
- Abscisse : quantité de polluant NH₄Cl injecté dans le bassin en g.

On y voit très clairement la relation linéaire qui existe entre d'un côté les concentrations de polluants injectés dans le bassin et de l'autre la mesure de NCl₃ dans l'air ou la diminution de la concentration en chlore libre.

La mesure de monochloramine et de dichloramine dans l'eau (dite mesure de chlore combiné) ne permet pas de mesurer précisément le passage de trichloramine dans l'air. En revanche, la mesure de la diminution de la concentration en chlore libre dans l'eau est bien corrélée avec la mesure de NCl₃ dans l'air.

## Revendications

1. Procédé de mesure continue de la concentration en trichloramine dans l'air d'un local fermé contenant un bassin d'eau traitée au chlore comprenant les étapes suivantes :
a - mesure de la concentration C1, avantageusement en mg/m³ ou ppb, en gaz oxydants dans l'air ambiant à l'intérieur du local à l'aide d'au moins un premier capteur électrochimique ampérométrique à électrolyte protégé par une membrane perméable aux gaz et dont le potentiel de travail fixe est supérieur à 1,1 V ;
b - mesure de la diminution de la concentration C2 en chlore libre dans le bassin d'eau, moyennée sur une période d'au moins 4 heures, avantageusement de 12 heure, convertie dans l'unité de mesure de C1, avantageusement en mg/m³ ou ppb ;
c - obtention de la concentration finale Cf en trichloramine dans l'air ambiant à l'intérieur du local par comparaison entre les concentrations C1 et C2 et choix de la plus petite de ces concentrations.

2. Procédé selon la revendication 1, **caractérisé en ce qu'**il comprend entre les étapes a) et b) les étapes intermédiaires suivantes :
a1 - mesure de la concentration C3, avantageusement en mg/m³ ou ppb, en gaz oxydants dans l'air ambiant à l'extérieur du local à l'aide d'au moins un second capteur électrochimique ampérométrique à électrolyte protégé par une membrane perméable aux gaz et dont le potentiel de travail fixe est supérieur à 1,1V ;
a2.- obtention de la concentration C4, avantageusement en mg/m³ ou ppb, en trichloramine dans l'air ambiant à l'intérieur du local par soustraction de la concentration C3 obtenue à l'étape a1) de la concentration C1 obtenue à l'étape a) ;
et **caractérisé en ce que** dans l'étape c) ce sont les concentrations C4 et C2 qui sont comparés.

3. Procédé selon l'une quelconque des revendications 1 ou 2, **caractérisé en ce que** le bassin d'eau est une piscine, avantageusement il s'agit d'un bassin ludique ou olympique.

4. Procédé selon l'une quelconque des revendications 1 à 3, **caractérisé en ce que** le local fermé est le hall d'une piscine couverte.

5. Procédé selon l'une quelconque des revendications 1 à 4, **caractérisé en ce que** le capteur est un système intégré constitué d'une cellule électrochimique ampérométrique de mesure miniaturisée, d'un système de prélèvement d'air dynamique, d'un filtre et d'un circuit électronique permettant de mesurer et de traduire les variations en données de concentration avec une limite de détection de 50 ppb de trichloramine.

6. Procédé selon la revendication 5, **caractérisé en ce que** la cellule électrochimique du capteur est composée d'une électrode centrale : cathode et d'une contre-électrode : anode et est maintenue à un potentiel de travail par une électrode de référence, les trois électrodes étant immergées dans une solution d'électrolyte qui est séparée de l'échantillon gazeux par une membrane perméable au gaz.

7. Procédé selon l'une quelconque des revendications 1 à 6, **caractérisé en ce que** l'humidité du local varie entre 40 et 75 % d'humidité relative.

8. Procédé selon l'une quelconque des revendications 1 à 7, **caractérisé en ce que** le capteur de l'étape a) est installé dans la gaine d'extraction de l'air dudit local.

9. Procédé de traitement de l'air d'un local fermé contenant un bassin d'eau traitée au chlore comprenant les étapes suivantes :
A - Mesure continue de la concentration en trichloramine dans l'air dudit local à l'aide du procédé selon l'une quelconque des revendications 1 à 8 ;
B - Diminution de la teneur en trichloramine dans l'air dès que la mesure de l'étape A est supérieure à la valeur de consigne.

10. Procédé selon la revendication 9, **caractérisé en ce que** l'étape B est mise en oeuvre par dilution de l'air du local avec un apport d'air extérieur au local et /ou baisse de consigne de chlore dans l'eau du bassin et / ou élimination des chloramines de l'eau du bassin.

11. Utilisation d'au moins un capteur ampérométrique électrochimique à électrolyte protégé par une membrane perméable aux gaz et dont le potentiel de travail fixe est supérieur à 1,1 V pour mesurer en continu la teneur en trichloramine dans l'air d'un local fermé contenant un bassin d'eau traitée au chlore, avantageusement pour déterminer la qualité de l'air dudit local fermé.

12. Utilisation d'au moins un capteur ampérométrique électrochimique à électrolyte protégé par une membrane perméable aux gaz et dont le potentiel de travail fixe est supérieur à 1,1 V couplé à une centrale de traitement de l'air d'un local fermé contenant un bassin d'eau traitée au chlore pour réguler le traitement de l'air dudit local fermé.

13. Installation comprenant :
- un bassin d'eau traitée au chlore dans un local fermé,
- au moins un premier capteur électrochimique ampérométrique à électrolyte protégé par une membrane perméable aux gaz et dont le potentiel de travail fixe est supérieur à 1,1V destiné à mesurer la concentration C1 en gaz oxydants dans l'air ambiant à l'intérieur du local,
- optionnellement au moins un second capteur électrochimique ampérométrique à électrolyte protégé par une membrane perméable aux gaz et dont le potentiel de travail fixe est supérieur à 1,1V destiné à mesurer la concentration C3 en gaz oxydants dans l'air ambiant à l'extérieur du local,
- un analyseur standard destiné à mesurer la diminution de la concentration C2 en chlore libre dans le bassin d'eau,
- et un dispositif électronique destiné à obtenir la concentration finale Cf en trichloramine dans l'air ambiant à l'intérieur du local en effectuant les étapes suivantes d'un calcul continu en temps réel:
a) calcul de la moyenne glissante de la concentration C2 sur une période d'au moins 4 heures, avantageusement de 12 heures,
b) conversion de cette moyenne dans l'unité de mesure de C1, avantageusement en mg/m³ ou ppb,
c) comparaison entre les concentrations C1 et C2 et sélection de la plus petite de ces concentrations,
ledit dispositif électronique plus avantageusement émettant une alarme lorsque la concentration ainsi obtenue dépasse un seuil préétabli.

14. Installation selon la revendication 13, **caractérisée en ce qu'**elle comprend en outre une gaine d'extraction de l'air dudit local, une centrale de traitement de l'air dudit local avantageusement équipée d'un dispositif de contrôle et de régulation de la ventilation d'air dudit local, un conduit d'arrivée d'air venant de l'extérieur du local, une gaine d'extraction de l'air venant de l'extérieur du local et au moins un ventilateur pour créer un circulation d'air.

15. Installation selon l'une quelconque des revendications 13 ou 14, **caractérisée en ce que** le au moins un premier capteur électrochimique ampérométrique à électrolyte protégé par une membrane perméable aux gaz et dont le potentiel de travail fixe est supérieur à 1,1V destiné à mesurer la concentration C1 en gaz oxydants dans l'air ambiant à l'intérieur du local est installé dans la gaine d'extraction de l'air dudit local.

16. Installation selon l'une quelconque des revendications 13 à 15, **caractérisée en ce que** l'éventuel au moins un second capteur électrochimique ampérométrique à électrolyte protégé par une membrane perméable aux gaz et dont le potentiel fixe de travail est supérieur à 1,1V destiné à mesurer la concentration C3 en gaz oxydants dans l'air ambiant à l'extérieur du local est installé dans le conduit d'arrivée d'air venant de l'extérieur du local.

## Patentansprüche

1. Verfahren zur kontinuierlichen Messung der Konzentration an Trichloramin in der Luft eines geschlossenen Raums, der ein Becken mit chlorbehandeltem Wasser enthält, umfassend die folgenden Schritte:
a - Messen der Konzentration C1, vorteilhafterweise in mg/mm³ oder ppb, an oxidierenden Gasen in der Umgebungsluft im Inneren des Raums mittels mindestens eines ersten elektrochemisch-amperometrischen Sensors mit Elektrolyt, der durch eine gasdurchlässige Membran geschützt ist und dessen festes Arbeitspotential größer als 1,1 V ist;
b - Messung der Verringerung der Konzentration C2 an freiem Chlor in dem Wasserbecken, gemittelt über einen Zeitraum von mindestens 4 Stunden, vorteilhafterweise 12 Stunden, umgerechnet in die Maßeinheit von C1, vorteilhafterweise in mg/mm³ oder ppb;
c - Erlangen der endgültigen Konzentration Cf an Trichloramin in der Umgebungsluft innerhalb des Raums durch Vergleich der Konzentrationen C1 und C2 und Auswählen der kleineren dieser Konzentrationen.

2. Verfahren nach Anspruch 1, **dadurch gekennzeichnet, dass** es zwischen den Schritten a) und b) die folgenden Zwischenschritte umfasst:
a1 - Messen der Konzentration C3, vorteilhafterweise in mg/mm³ oder ppb, an oxidierenden Gasen in der Umgebungsluft außerhalb des Raums mittels mindestens eines zweiten elektrochemisch-amperometrischen Sensors mit Elektrolyt, der durch eine gasdurchlässige Membran geschützt ist und dessen festes Arbeitspotential größer als 1,1 V ist;
a2 - Erlangen der Konzentration C4, vorteilhafterweise in mg/mm³ oder ppb, an Trichloramin in der Umgebungsluft im Inneren des Raums durch Subtrahieren der in Schritt a1) erlangten Konzentration C3 von der in Schritt a) erlangten Konzentration C1;
und **dadurch gekennzeichnet, dass** es in Schritt c) die Konzentrationen C4 und C2 sind, die verglichen werden.

3. Verfahren nach einem der Ansprüche 1 oder 2, **dadurch gekennzeichnet, dass** das Wasserbecken ein Schwimmbecken ist, vorteilhafterweise ein Freizeit- oder Olympiabecken.

4. Verfahren nach einem der Ansprüche 1 bis 3, **dadurch gekennzeichnet, dass** der geschlossene Raum die Halle eines Hallenbads ist.

5. Verfahren nach einem der Ansprüche 1 bis 4, **dadurch gekennzeichnet, dass** der Sensor ein integriertes System ist, das aus einer miniaturisierten elektrochemisch-amperometrischen Messzelle, einem dynamischen Luftentnahmesystem, einem Filter und einer elektronischen Schaltung besteht, was es ermöglicht, die Variationen bei den Konzentrationsdaten zu messen und mit einer Nachweisgrenze von 50 ppb Trichloramin umzuwandeln.

6. Verfahren nach Anspruch 5, **dadurch gekennzeichnet, dass** die elektrochemische Zelle des Sensors aus einer mittleren Elektrode: Kathode und einer Gegenelektrode:Anode besteht und durch eine Referenzelektrode auf einem Arbeitspotential gehalten wird, wobei die drei Elektroden in eine Elektrolytlösung eingetaucht sind, die durch eine gasdurchlässige Membran von der Gasprobe getrennt ist.

7. Verfahren nach einem der Ansprüche 1 bis 6, **dadurch gekennzeichnet, dass** die Luftfeuchtigkeit in dem Raum zwischen 40 und 75 % relativer Luftfeuchtigkeit variiert.

8. Verfahren nach einem der Ansprüche 1 bis 7, **dadurch gekennzeichnet, dass** der Sensor des Schritts a) in dem Luftabzugskanal des Raums installiert ist.

9. Behandlungsverfahren der Luft in einem geschlossenen Raum, der ein Becken mit chlorbehandeltem Wasser enthält, umfassend die folgenden Schritte:
A - Kontinuierliches Messen der Konzentration an Trichloramin in der Luft des Raums mittels des Verfahrens nach einem der Ansprüche 1 bis 8;
B - Senken des Gehalts an Trichloramin in der Luft, sobald der Messwert von Schritt A über dem Vorgabewert ist.

10. Verfahren nach Anspruch 9, **dadurch gekennzeichnet, dass** Schritt B durch Verdünnen der Luft des Raums mit einer Luftzufuhr von außerhalb des Raums und/oder Senken des Chlorvorgabewerts in dem Beckenwasser und/oder Entfernen von Chloraminen aus dem Beckenwasser durchgeführt wird.

11. Verwendung mindestens eines amperometrisch-elektrochemischen Sensors mit Elektrolyt, der durch eine gasdurchlässige Membran geschützt ist und dessen festes Arbeitspotenzial größer als 1,1 V ist, zum kontinuierlichen Messen des Gehalts an Trichloramin in der Luft eines geschlossenen Raums, der ein Becken mit chlorbehandeltem Wasser enthält, vorteilhafterweise zum Bestimmen der Qualität der Luft des geschlossenen Raums.

12. Verwendung mindestens eines elektrochemisch-amperometrischen Sensors mit Elektrolyt, der durch eine gasdurchlässige Membran geschützt ist und dessen festes Arbeitspotenzial größer als 1,1 V ist, gekoppelt mit einer Luftaufbereitungszentrale eines geschlossenen Raums, der ein Becken mit chlorbehandeltem Wasser enthält, um die Luftaufbereitung des geschlossenen Raums zu regulieren.

13. Anlage, umfassend:
- ein Becken mit chlorbehandeltem Wasser in einem geschlossenen Raum,
- mindestens einen ersten amperometrisch-elektrochemischen Sensor mit Elektrolyt, der durch eine gasdurchlässige Membran geschützt ist und dessen festes Arbeitspotenzial größer als 1,1 V ist, der dazu bestimmt ist, die Konzentration C1 von oxidierenden Gasen in der Umgebungsluft im Inneren des Raums zu messen,
- optional mindestens einen zweiten amperometrisch-elektrochemischen Sensor mit Elektrolyt, der durch eine gasdurchlässige Membran geschützt ist und dessen festes Arbeitspotenzial größer als 1,1 V ist, der dazu bestimmt ist, die Konzentration C3 von oxidierenden Gasen in der Umgebungsluft außerhalb des Raums zu messen,
- ein standardmäßiges Analysegerät zum Messen der Verringerung der Konzentration C2 an freiem Chlor in dem Wasserbecken,
- und eine elektronische Vorrichtung zum Erlangen der endgültigen Konzentration Cf an Trichloramin in der Umgebungsluft im Inneren des Raums, indem die folgenden Schritte einer kontinuierlichen Berechnung in Echtzeit durchgeführt werden:
a) Berechnen des gleitenden Mittelwerts der Konzentration C2 über einen Zeitraum von mindestens 4 Stunden, vorteilhafterweise 12 Stunden,
b) Umrechnen dieses Durchschnitts in die Maßeinheit von C1, vorteilhafterweise in mg/mm³ oder ppb,
c) Vergleichen der Konzentrationen C1 und C2 und Auswählen der kleinsten dieser Konzentrationen,
wobei die elektronische Vorrichtung vorteilhafterweise einen Alarm ausgibt, wenn die so erlangte Konzentration einen voreingestellten Schwellenwert überschreitet.

14. Anlage nach Anspruch 13, **dadurch gekennzeichnet, dass** sie ferner einen Luftabzugskanal für die Luft aus dem Raum, eine Luftaufbereitungszentrale für den Raum, die vorteilhafterweise mit einer Vorrichtung zur Kontrolle und Regulierung der Luftventilation des Raums ausgestattet ist, einen Luftzufuhrkanal von außerhalb des Raums, einen Luftabzugskanal für die Luft von außerhalb des Raums und mindestens einen Ventilator zum Erzeugen einer Luftzirkulation umfasst.

15. Anlage nach einem der Ansprüche 13 oder 14, **dadurch gekennzeichnet, dass** der mindestens eine erste elektrochemischamperometrische Sensor mit Elektrolyten, der durch eine gasdurchlässige Membran geschützt ist und dessen festes Arbeitspotenzial größer als 1,1 V ist, der dazu bestimmt ist, die Konzentration C1 an oxidierenden Gasen in der Umgebungsluft im Inneren des Raums zu messen, in dem Luftabzugskanal des Raums installiert ist.

16. Anlage nach einem der Ansprüche 13 bis 15, **dadurch gekennzeichnet, dass** der eventuell vorhandene mindestens eine zweite elektrochemischamperometrische Sensor mit Elektrolyten, der durch eine gasdurchlässige Membran geschützt ist und dessen festes Arbeitspotenzial größer als 1,1 V ist, zum Messen der Konzentration C3 an oxidierenden Gasen in der Umgebungsluft außerhalb des Raums in dem Luftzufuhrkanal installiert ist, der von außerhalb des Raums kommt.

## Claims

1. A method for continuous measurement of the concentration of trichloramine in the air of a closed room containing a basin of water treated with chlorine comprising the following steps:
a - measurement of the concentration C1, advantageously in mg/m³ or ppb, in oxidizing gases in the ambient air inside the room using at least one first amperometric electrochemical sensor with an electrolyte protected by a gas-permeable membrane and whose fixed work potential is higher than 1.1 V;
b - measurement of the reduction in the concentration C2 of free chlorine in the water basin, averaged over a period of at least 4 hours, advantageously 12 hours, converted into the unit of measurement of C1, advantageously in mg/m³ or ppb;
c - obtaining the final concentration Cf of trichloramine in the ambient air inside the room by comparison between the concentrations C1 and C2 and choice of the smallest of these concentrations.

2. The method according to claim 1, **characterized in that** it comprises between steps a) and b) the following intermediate steps:
a1 - measurement of the concentration C3, advantageously in mg/m³ or ppb, in oxidizing gases in the ambient air outside the room using at least one second amperometric electrochemical sensor with electrolyte protected by a gas-permeable membrane and whose fixed work potential is greater than 1.1 V;
a2.- obtaining the concentration C4, advantageously in mg/m³ or ppb, in trichloramine in the ambient air inside the room by subtracting the concentration C3 obtained in step a1) from the concentration C1 obtained in step a);
and **characterized in that** in step c) it is the concentrations C4 and C2 that are compared.

3. The method according to any one of claims 1 or 2, **characterized in that** the water basin is a swimming pool, advantageously it is a recreational or Olympic pool.

4. The method according to any one of claims 1 to 3, **characterized in that** the closed room is the hall of an indoor swimming pool.

5. The method according to any one of claims 1 to 4, **characterized in that** the sensor is an integrated system consisting of a miniaturized amperometric electrochemical measuring cell, a dynamic air sampling system, a filter and an electronic circuit allowing the variations to be measured and translated into concentration data with a detection limit of 50 ppb of trichloramine.

6. The method according to claim 5, **characterized in that** the electrochemical cell of the sensor is composed of a central electrode: cathode and a counter electrode: anode and is maintained at a working potential by a reference electrode, the three electrodes being immersed in an electrolyte solution which is separated from the gas sample by a gas permeable membrane.

7. The method according to any one of claims 1 to 6, **characterized in that** the humidity of the room varies between 40 and 75% of relative humidity.

8. The method according to any one of claims 1 to 7, **characterized in that** the sensor of step a) is installed in the air extraction duct of said room.

9. A method for treating the air of a closed room containing a basin of chlorine-treated water comprising the following steps:
A - Continuous measurement of the concentration of trichloramine in the air of said room using the method according to any one of claims 1 to 8;
B - Decrease in the trichloramine content in the air as soon as the measurement in step A is greater than the set value.

10. The method according to claim 9, **characterized in that** step B is implemented by diluting the air in the room with a supply of air from outside the room and/or lowering the chlorine set point in the water of the basin and/or elimination of chloramines from the water of the basin.

11. A use of at least one electrochemical amperometric sensor with an electrolyte protected by a gas-permeable membrane and whose fixed working potential is greater than 1.1 V to continuously measure the trichloramine content in the air of a closed room containing a basin of water treated with chlorine, advantageously to determine the air quality of said closed room.

12. The use of at least one electrochemical amperometric sensor with an electrolyte protected by a gas-permeable membrane and whose fixed working potential is greater than 1.1 V coupled to an air treatment unit for a closed room containing a basin of chlorine-treated water to regulate the air treatment of said closed room.

13. An installation comprising:
- a basin of chlorine-treated water in a closed room,
- at least a first amperometric electrochemical sensor with an electrolyte protected by a gas-permeable membrane and whose fixed working potential is greater than 1.1 V intended to measure the concentration C1 of oxidizing gases in the ambient air inside the room,
- optionally at least a second amperometric electrochemical sensor with electrolyte protected by a gas-permeable membrane and whose fixed working potential is greater than 1.1 V intended to measure the concentration C3 of oxidizing gases in the ambient air outside the room,
- a standard analyser intended to measure the reduction in the C2 concentration of free chlorine in the water basin,
- and an electronic device intended to obtain the final concentration Cf of trichloramine in the ambient air inside the room by carrying out the following steps of a continuous calculation in real time:
a) calculation of the sliding average of the concentration C2 over a period of at least 4 hours, advantageously 12 hours,
b) conversion of this average into the unit of measurement of C1, advantageously in mg/m³ or ppb,
c) comparison between the concentrations C1 and C2 and selection of the smallest of these concentrations,
said electronic device more advantageously emitting an alarm when the concentration thus obtained exceeds a pre-established threshold.

14. The installation according to claim 13, **characterized in that** it further comprises a duct for extracting air from said room, an air treatment unit for said room advantageously equipped with a device for controlling and regulating the ventilation of air from said room, an air inlet duct coming from outside the room, an air extraction duct coming from outside the room and at least one fan to create air circulation.

15. The installation according to any one of claims 13 or 14, **characterized in that** the at least one first amperometric electrochemical sensor has an electrolyte protected by a gas-permeable membrane and whose fixed working potential is greater than 1.1 V intended to measure the concentration C1 of oxidizing gases in the ambient air inside the room is installed in the air extraction duct of said room.

16. The installation according to any one of claims 13 to 15, **characterized in that** the possible second amperometric electrochemical sensor has an electrolyte protected by a gas-permeable membrane and whose fixed working potential is greater than 1.1 V intended to measure the concentration C3 of oxidizing gases in the ambient air outside the room is installed in the air inlet duct coming from outside the room.
